Europäisches Patentamt

European Patent Office

Office européen des brevets

(11) Veröffentlichungsnummer: **0 103 150**
**A1**

## EUROPÄISCHE PATENTANMELDUNG

(21) Anmeldenummer: 83107744.1

(22) Anmeldetag: 05.08.83

(51) Int. Cl.³: **G 01 F 1/68,** G 01 P 5/10, G 01 K 17/10

(30) Priorität: 08.09.82 DE 3233329

(71) Anmelder: **TECOVA-AG, Litzibuech 8, CH-5610 Wohlen (CH)**

(43) Veröffentlichungstag der Anmeldung: 21.03.84 **Patentblatt 84/12**

(72) Erfinder: **Widmer, Fritz, Prof. Dr., Teunmoosstrasse 8, CH-8044 Gockhausen (CH)**
Erfinder: **Covelli, Bruno, Dr., Margretenweg 3, CH-5034 Suhr (CH)**

(74) Vertreter: **Patentanwälte Grünecker, Dr. Kinkeldey, Dr. Stockmair, Dr. Schumann, Jakob, Dr. Bezold, Meister, Hilgers, Dr. Meyer-Plath, Maximilianstrasse 58, D-8000 München 22 (DE)**

(84) Benannte Vertragsstaaten: **AT CH FR GB IT LI NL**

(54) Verfahren zum Messen der Strömungsgeschwindigkeit eines Fluids und Einrichtung zur Durchführung des Verfahrens.

(57) Bei einem Verfahren zum Messen der Strömungsgeschwindigkeit eines Fluids wird einem von dem Fluid (3) umströmten Körper (7) eine vorbestimmte Kühlleistung oder Heizleistung zugeführt und die Strömungsgeschwindigkeit wird aufgrund des Temperaturunterschiedes zwischen der Temperatur des Körpers (7) und der Temperatur des Fluids (3) im Bereich des Körpers (7) bestimmt. Eine Einrichtung zur Durchführung des Verfahrens umfaßt einen Körper (7), welcher Kühlmittel zum Verringern und/oder Heizmittel (11) zum Erhöhen der Temperatur des Körpers aufweist und zumindest teilweise in dem Fluid (3) anzuordnen ist, und mindestens einen Temperaturfühler (14) zum Bestimmen der Temperatur des Körpers (7) sowie einen zusätzlichen Temperaturfühler (15) zum Bestimmen der Temperatur des Fluids (3) im Bereich des Körpers (7). Wenn zusätzlich der Temperaturunterschied zwischen dem in einen Verbraucher einströmenden und dem aus diesem ausströmenden Fluid bestimmt wird, so kann aufgrund des Temperaturunterschiedes und der Strömungsgeschwindigkeit die von dem Verbraucher aus dem Fluid aufgenommene Wärmemenge oder an das Fluid abgegebene Wärmemenge bestimmt werden.

Verfahren zum Messen der Strömungsgeschwindigkeit eines Fluids und Einrichtung zur Durchführung des Verfahrens

B e s c h r e i b u n g

Die Erfindung betrifft ein Verfahren zum Messen der
Strömungsgeschwindigkeit eines Fluids und eine Einrichtung zur Durchführung des Verfahrens, sowie das
Bestimmen der von einem fluiddurchflossenen Verbraucher
dem Fluid entnommenen oder an dieses abgegebenen Wärmemenge und eine Einrichtung hierfür unter Einsatz jenes
Verfahrens und jener Einrichtung.

Auf vielen Gebieten der Technik ist es von Bedeutung,
die Strömungsgeschwindigkeit eines Fluids zu messen,
wobei sich bei Kenntnis des Querschnittes des Fluidstromes und der Fluiddichte der Massendurchsatz des
Fluids bestimmen läßt.

Eine der bekannten Möglichkeiten, die Strömungsgeschwindigkeit eines Fluids zu bestimmen, besteht darin, einen von
einem elektrischen Strom durchflossenen Draht in einem
Fluid anzuordnen und den Widerstand des Drahtes zu bestimmen. Der Widerstand des Drahtes hängt von der Drahttemperatur ab, welche unter anderem von der Strömungsgeschwindigkeit des Fluids abhängt. Je größer die Strömungsgeschwindigkeit des Fluids ist, umso tiefer liegt die Temperatur des Drahtes, der von dem ihn durchfließenden Strom
erwärmt wird. Die Strömungsgeschwindigkeit eines Fluids
auf diese Art zu messen ist relativ aufwendig, da die temperaturabhängigen Widerstandsänderungen sehr klein sind,
so daß eine Brückenschaltung erforderlich ist.

Ferner ist es bekannt, die Strömungsmenge eines Fluids
mit Hilfe eines mit einem Zählwerk gekoppelten Flügelrades, einer Ultraschalleinrichtung sowie magnetischer
Einrichtungen zu messen. Außerdem ist es bekannt, die
Strömungsgeschwindigkeit eines Fluids durch die Auslenkung
eines in das Fluid eingebrachten Reibungskörpers oder
einer Düse zu messen, wobei im letztgenannten Fall eine
Druckabfallsmessung vorgenommen wird.

Diese Meßsysteme sind durchwegs kostspielig und verlangen
im allgemeinen einen großen mechanischen und/oder elektronischen Aufwand. Ferner ergibt sich häufig eine Einschränkung
aufgrund der Temperatur und der Dichte des Fluids.

Der Erfindung liegt die Aufgabe zugrunde, ein einfaches
und kostengünstiges Verfahren zum Bestimmen der Strömungsgeschwindigkeit eines Fluids und eine Einrichtung zur Durchführung des Verfahrens anzugeben, sowie eine einfache und
kostengünstige Möglichkeit zu schaffen, die von einem fluiddurchflossenen Verbraucher aus dem Fluid aufgenommene oder
an dieses abgegebene Wärmemenge unter Einsatz des Verfahrens
und der genannten Einrichtung anzugeben.

Das erfindungsgemäße Verfahren zum Messen der Strömungsgeschwindigkeit eines Fluids, mit dem die angegebene Aufgabe
gelöst wird, ist dadurch gekennzeichnet, daß einem von dem
Fluid umströmten Körper eine vorbestimmte Kühlleistung
oder Heizleistung zugeführt und die Strömungsgeschwindigkeit aufgrund des Temperaturunterschiedes zwischen der
Temperatur des Körpers und der Temperatur des Fluids im
Bereich des Körpers bestimmt wird.

Das erfindungsgemäße Verfahren geht von dem Grundgedanken aus, daß der Wärmestrom zwischen einer von einem Fluid umströmten Oberfläche und dem diese Oberfläche umströmenden Fluid einerseits von dem Temperaturunterschied zwischen der Oberfläche und dem Fluid und andererseits von dem Wärme- übergangskoeffizienten abhängt, der unter anderem eine Funktion der Strömungsgeschwindigkeit des Fluids ist. In welche Richtung der Wärmestrom fließt, hängt davon ab, ob die Oberfläche eine höhere oder niederere Temperatur als das sie umströmende Fluid aufweist.

Im wesentlichen liegt dem erfindungsgemäßen Verfahren eine Temperaturmessung zugrunde, welche auf einfache Weise ohne irgendwelche Schwierigkeiten durchgeführt werden kann.

Bei einer vorteilhaften Weiterbildung des erfindungsgemäßen Verfahrens wird dem Körper die vorbestimmte Kühlleistung oder Heizleistung zumindest solange zugeführt, bis der Temperaturunterschied stationär geworden ist. Auf besonders augenfällige Weise zeigt diese Weiterbildung, daß das Bestimmen der Strömungsgeschwindigkeit des Fluids auf lediglich einer Temperaturmessung beruht. Wird dem Körper und damit auch seiner Oberfläche eine definierte  Kühlleistung oder Heizleistung zugeführt, so stellt sich nach einiger Zeit ein stationärer Temperaturunterschied zwischen dieser Oberfläche und dem Fluid ein. Aus diesem Temperaturunterschied läßt sich unmittelbar der momentane Wärmeübergangskoeffizient bestimmen. Dieser Wärmeübergangskoeffizient ist bei vorgegebener geometrischer Ausbildung der Oberfläche und bekannten Materialeigenschaften des Fluids ein direktes Maß für dessen Strömungsgeschwindigkeit.

Bei einer anderen, vorteilhaften Weiterbildung des erfindungsgemäßen Verfahrens wird dem Körper die vorbestimmte Kühlleistung oder Heizleistung während einer kurzen Zeitdauer zugeführt und daraufhin das Zeitintervall bestimmt, bis der Temperaturunterschied einen vorgegebenen kleinen Wert unterschritten hat. Hier besteht ein Vorteil darin, daß nur während einer kurzen Zeit eine Kühlleistung oder Heizleistung dem Körper zugeführt wird. Dies ist beispielsweise von Bedeutung, wenn die Heizleistung durch elektrische Mittel erbracht wird, die von einer Batterie betrieben werden. Mit diesem Kurzzeitbetrieb wird die Batterie nicht stark beansprucht. Im Handel erhältliche mikroelektronische Bauteile, insbesondere solche mit integrierten Schaltungen können verwandt werden, um ohne nennenswerte Kosten die Dauer zu bestimmen, bis der Temperaturunterschied den vorgegebenen, kleinen Wert unterschritten hat.

Die erfindungsgemäße Einrichtung zum Messen der Strömungsgeschwindigkeit eines Fluids, insbesondere zur Durchführung des erfindungsgemäßen Verfahrens zur Strömungsmessung eines Fluids ist dadurch gekennzeichnet, daß die Einrichtung einen Körper, der Kühlmittel zum Verringern und/oder Heizmittel zum Erhöhen der Temperatur des Körpers aufweist und zumindest teilweise in dem Fluid anzuordnen ist, und mindestens einen Temperaturfühler zum Bestimmen der Temperatur des Körpers sowie einen zusätzlichen Temperaturfühler zum Bestimmen der Temperatur des Fluids im Bereich des Körpers umfaßt.

Diese erfindungsgemäße Einrichtung kann in vorteilhafter Weise in der Form einer Meßsonde ausgestaltet sein, wobei der mindestens eine Temperaturfühler zum Bestimmen der Temperatur des Körpers am zweckmäßigsten innerhalb des Körpers angeordnet ist. Es können auch mehrere Temperaturfühler innerhalb des Körpers vorgesehen sein, wobei durch Mittelung der von den einzelnen Temperaturfühlern gemessenen Temperatur ein genauerer Wert für die Temperatur des Körpers erhalten werden kann.

Da es bei der erfindungsgemäßen Einrichtung auf den Temperaturunterschied zwischen der Temperatur des Körpers und derjenigen des Fluids ankommt, kann die Temperatur des Körpers unter Verwendung eines Kühlmittels unter die Temperatur des Fluids gesenkt oder auf eine höhere Temperatur als diejenige des Fluids durch Verwendung eines Heizmittels angehoben werden. Die Temperatur des Körpers unterhalb derjenigen des Fluids zu halten ist beispielsweise dann von Bedeutung, wenn das Fluid eine Flüssigkeit ist, die einen tiefen Siedepunkt aufweist. Die Verwendung eines Kühlmittels ist auch dann von Vorteil, wenn die Temperatur des flüssigen Fluids nahe seiner Siedetemperatur liegt. In beiden Fällen kann auf zuverlässige Weise durch Verwendung eines Kühlmittels sichergestellt werden, daß die Flüssigkeit an der Oberfläche des Körpers nicht zu sieden beginnt, so daß an der Oberfläche des Körpers auch keine Gasblasen entstehen, die zu einer fehlerhaften Meßung führen könnten.

Gemäß einer vorteilhaften Weiterbildung dieser erfindungsgemäßen Einrichtung sind die Kühlmittel und/oder Heizmittel als eine von einem Kühlmedium bzw. Heizmedium durchströmbare Leitung ausgebildet. Dabei ist es zweckmäßig, wenn die Leitung innerhalb des Körpers verläuft.

Besonders vorteilhaft ist es, wenn die Heizmittel eine elektrische Heizeinrichtung umfassen, da sich dann die dem Körper zuzuführende Heizleistung besonders einfach einstellen läßt.

Gemäß einer wiederum anderen, vorteilhaften Weiterbildung dieser erfindungsgemäßen Einrichtung sind die Kühlmittel und/oder Heizmittel und der mindestens eine Temperaturfühler unter Bildung des Körpers mit einem Werkstoff vergossen und/oder in diesen eingebettet. Durch das Vergießen kann auf einfache Weise ein Körper mit ausreichender mechanischer Festigkeit erhalten werden. Wenn beim Vergießen ein Außengewinde an dem Körper ausgebildet wird, so kann der Körper damit in eine Gewindebohrung eingeschraubt werden, die an einer Rohrwand vorgesehen ist. Dies stellt eine sehr einfache Befestigungsmöglichkeit für den Körper dar. Durch das Vergießen erübrigen sich Halterungsteile für die Kühlmittel und/oder Heizmittel und den wenigstens einen Temperaturfühler.

Eine andere vorteilhafte Weiterbildung dieser erfindungsgemäßen Einrichtung ist dadurch gekennzeichnet, daß der Körper eine Umhüllung aufweist, in der der mindestens eine Temperaturfühler und die Kühlmittel und/oder Heizmittel angeordnet sind. Mit einem Vergußmittel können die Zwischenräume gefüllt werden. In diesem Fall dient die Umhüllung als Halterung. Sie stellt auch bei geeigneter Materialwahl einen Schutz dar, wenn die erfindungsgemäße Einrichtung in beispielsweise einem chemisch agressiven Fluid angeordnet wird.

Gemäß einer vorteilhaften Weiterbildung der Erfindung ist der zusätzliche Temperaturfühler, mit dem die Temperatur des Fluids im Bereich des Körpers gemessen wird, an dem Körper selbst oder an der Umhüllung befestigt. Damit sind besondere Befestigungsmittel für den zusätzlichen Temperaturfühler, mit dem die Temperatur des Fluids gemessen wird, überflüssig.

Im Rahmen der Erfindung ist es zweckmäßig, eine Steuer- und Auswerteeinrichtung vorzusehen, der die Ausgangssignale der Temperaturfühler zugeführt werden und mit der dem Körper eine vorbestimmte Kühlleistung oder Heizleistung zuführbar und der Temperaturunterschied zwischen der Temperatur des Körpers und der Temperatur des Fluids im Bereich des Körpers feststellbar ist. Eine besonders einfache Betriebsweise ergibt sich dann, wenn die Kühlmittel bzw. Heizmittel in dem Körper von elektrischen Einrichtungen gebildet werden. Unter diesen Umständen läßt sich dann die Kühlleistung oder Heizleistung auf besonders einfache Weise steuern und in dem Körper hervorrufen, während gleichzeitig oder verzögert, was von der Art des Messens abhängt, die Temperatur festgestellt wird.

Gemäß einer anderen zweckmäßigen Weiterbildung der Erfindung wird dem Körper durch die Steuer- und Auswerteeinrichtung eine vorbestimmte Kühlleistung oder Heizleistung während einer Zeitdauer zugeführt, die zum Einstellen eines stationären Temperaturunterschiedes zwischen der Temperatur des Körpers und der Temperatur des Fluids im Bereich des Körpers ausreichend lang ist.

Eine andere zweckmäßige Weiterbildung der Erfindung ist dadurch gekennzeichnet, daß dem Körper durch die Steuer- und Auswerteeinrichtung eine vorbestimmte Heizleistung oder Kühlleistung während einer relativ kurzen Zeitdauer zuführr- bar ist und daß durch die Steuer- und Auswerteeinrichtung die Zeitdauer feststellbar ist, die zur Verringerung des Temperaturunterschiedes zwischen der Temperatur des Körpers und der Temperatur des Fluids im Bereich des Körpers unter einen vorbestimmten kleinen Wert erforderlich ist.

Beide der letztgenannten Weiterbildungen weisen besondere Vorteile auf. Wenn fortlaufend eine Kühlleistung oder Heizleistung dem Körper zugeführt wird, so kann fortwährend die Strömungsgeschwindigkeit bestimmt werden. Die Information über die gerade vorliegende Strömungsgeschwindigkeit kann beispielsweise einem Regelkreis zugeführt werden, durch den die Strömungsgeschwindigkeit auf einem vorgegebenen Wert gehalten wird, wobei ein die Strömungsgeschwindigkeit beeinflussendes Organ, wie z.B. ein Ventil, entsprechend gesteuert wird. Wenn nur kurzzeitig dem Körper eine Kühlleistung oder Heizleistung zugeführt wird, so ist der hierfür erforderliche Energieverbrauch wesentlich geringer, so daß mit einer kleinen Energiequelle z.B. einer Batterie oder unter Umständen einem durch Lichtenergie elektrisch aufladbaren Speicher der Strömungsmesser betrieben werden kann.

Gemäß einer anderen vorteilhaften Weiterbildung der Erfindung ist der Körper zumindest teilweise innerhalb eines handelsüblichen Rohrleitungs- oder Armaturteils angeordnet. In vorteilhafter Weise erleichtert diese Anordnung den Einbau einer erfindungsgemäßen Einrichtung zur Strömungsmessung in ein Rohrleitungssystem. Im Rahmen der Erfindung ist auch vorgesehen, daß das Armaturteil ein Ventil sein kann. In diesem Fall besteht eine besonders vorteilhafte Weiterbildung der Erfindung darin, daß in dem Ventil ein mit der Oberfläche des Körpers in Eingriff stehendes oder in Eingriff bringbares und relativ zu der Oberfläche des Körpers bewegbares Schaberelement vorgesehen ist, welches antriebsmäßig mit einem bei Betätigung des Ventils bewegten Teil verbunden ist, wodurch bei Betätigung des Ventils mindestens ein Bereich der Oberfläche des Körpers gereinigt werden kann. Auf diese Weise können von der Oberfläche des Körpers Ablagerungen, die sich aus dem Fluid auf der Oberfläche abgesetzt haben, entfernt werden. Durch Ablagerungen auf der Oberfläche wird der Wärmeübergangskoeffizient zwischen dem Fluid und dem Körper beeinflußt, so daß, wenn diese Ablagerungen eine gewisse Dicke erreicht haben, die Gefahr besteht, daß durch die dabei erhaltenen Meßergebnisse eine fehlerhafte Aussage über die Strömungsgeschwindigkeit des Fluids erhalten wird.

Im Rahmen der Erfindung wird auch ein Verfahren zum Bestimmen der von einem fluiddurchflossenen Verbraucher aus dem Fluid aufgenommenen oder an das Fluid abgegebenen Wärmemenge angegeben, welches erfindungsgemäß dadurch gekennzeichnet ist, daß die Strömungsgeschwindigkeit des Fluids mit dem erfindungsgemäßen Verfahren zum Messen der Strömungsgeschwindigkeit eines Fluids an der Eintrittsseite und/oder der Austrittsseite des Fluids in den bzw. aus dem Verbraucher und der Unterschied der Fluidtemperatur zwischen der Eintrittsseite und der Austrittsseite des Verbrauchers bestimmt werden.

Wenn der Verbraucher dem Fluid eine Wärmemenge entnimmt, so liegt die Temperatur des Fluids an der Austrittsseite des Verbrauchers unter derjenigen der Eintrittsseite. Wenn andererseits das Fluid ein beispielsweise Kühlmittel ist, so gibt der Verbraucher eine Wärmemenge an das Fluid ab, so daß infolgedessen die Temperatur des Fluids an der Austrittsseite des Verbrauchers über derjenigen an seiner Eintrittsseite liegt.

Sind der Temperaturunterschied zwischen der Temperatur des Fluids an der Eintrittsseite und der Temperatur des Fluids an der Austrittsseite des Verbrauchers, der Massendurchsatz und die spezifische Wärme des Fluids bekannt, so läßt sich die von dem Verbraucher aufgenommene bzw. von diesem abgegebene Wärmemenge bestimmen. Der Massendurchsatz kann bei bekanntem Leitungsquerschnitt und bekannter Dichte des Fluids mittels der Strömungsgeschwindigkeit des Fluids bestimmt werden. Die Strömungsgeschwindigkeit läßt sich in zuverlässiger und kostengünstiger Weise mittels des erfindungsgemäßen Verfahrens zum Bestimmen der Strömungsgeschwindigkeit eines Fluids bzw. der erfindungsgemäßen Einrichtung zum Bestimmen der Strömungsgeschwindigkeit eines Fluids feststellen.

Bei der derzeitigen Energiesituation ist es von großer Bedeutung, die von einem Verbraucher einem Fluid entnommene Wärmemenge auf zuverlässige, einfache und kostengünstige

0103150

Weise festzustellen. Im Zuge der Energieeinsparung ist jeder Wohnungsmieter, dessen Heizung von einer Wärmezentrale versorgt wird, in hohem Maße daran interessiert, festzustellen, wie groß sein Wärmeverbrauch ist. Bei der genannten Wärmezentrale kann es sich um eine innerhalb eines Wohngebäudes installierte Heizungsanlage oder aber auch um ein Fernheizkraftwerk handeln.

Wenn, wie es im Rahmen der Erfindung vorgesehen ist, die Strömungsgeschwindigkeit des Fluids in der vorhergehend angegebenen Weise bestimmt und gleichzeitig der Temperaturunterschied zwischen der Eintrittsseite des Fluids in den Verbraucher und der Austrittsseite des Fluids aus dem Verbraucher bestimmt wird, so läßt sich die Verbraucherwärmemenge ohne weiteres feststellen. Der erfindungsgemäße Strömungsmesser kann entweder stromabwärts oder aber stromaufwärts des Verbrauchers in dem Fluid angeordnet werden. Im Falle einer Heizungseinrichtung einer Wohnung genügt es, eine erfindungsgemäße Einrichtung zum Bestimmen der Strömungsgeschwindigkeit entweder in der Zufluß- oder Rückflußleitung für die Heizung in der Wohnung anzuordnen und den Temperaturunterschied des Fluids in diesen beiden Leitungen zu bestimmen. Mit anderen Worten ausgedrückt bedeutet dies, daß nur eine einzige Strömungsgeschwindigkeitsmeßeinrichtung benötigt wird. Wenn, wie es bisher üblich war, Verdunstungswärmemengenmesser verwandt werden, so ist von diesem jeweils mindestens eine an jedem Heizkörper anzubringen. Im Rahmen der Erfindung ist es möglich, die in den einzelnen Wohnungen einer Wohnanlage verbrauchten Wärmemengen von nur einer einzigen Steuer- und Auswerteeinrichtung zu messen. Von jeder individuellen Einrichtung zum Messen der Strömungsgeschwindigkeit und des Temperaturunterschiedes zwischen dem ein- und ausströmenden Heizungsfluid müssen lediglich Signalleitungen zu der zentralen Steuer- und Auswerteeinrichtung gelegt werden.

0103150

Die Erfindung wird im folgenden anhand von Ausführungsbeispielen unter Bezugnahme auf die Figuren näher erläutert.
Es zeigt:

Fig. 1          eine Ausführungsform einer Eirichtung
                zum Messen der Strömungsgeschwindigkeit
                eines Fluids nach der Erfindung, und

Fig. 2          eine schematische Darstellung einer Ausfführungsform, mit der erfindungsgemäß
                die von einem Verbraucher aus dem Fluid
                aufgenommene oder an das Fluid abgegebene
                Wärmemenge bestimmt werden kann.

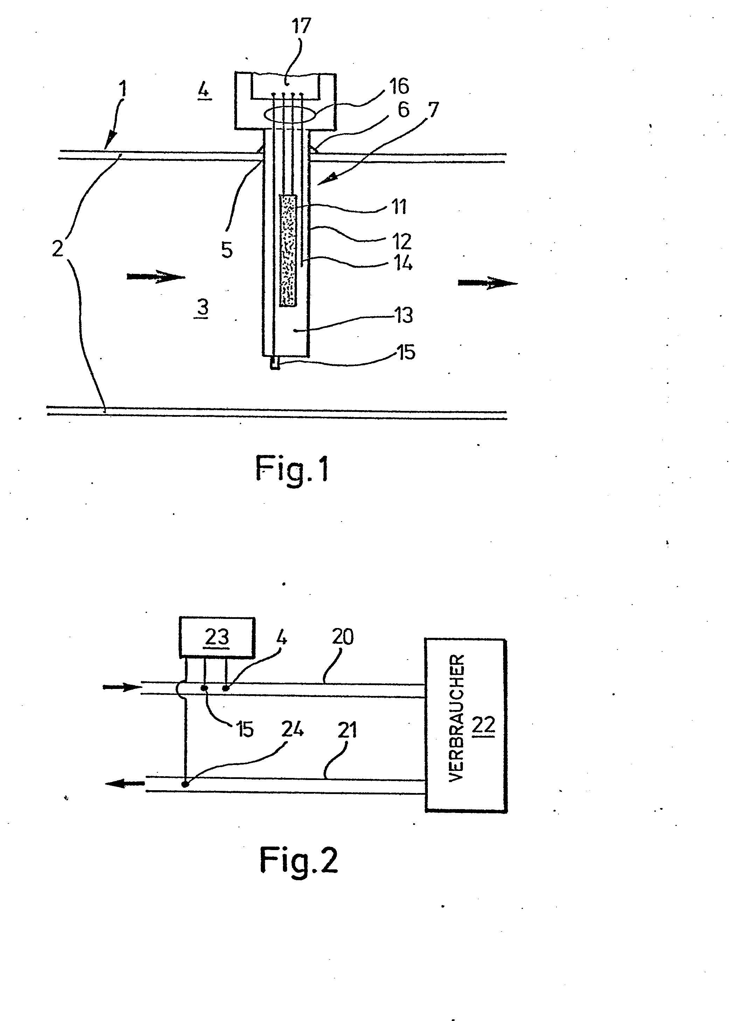

In Fig. 1 ist ein Leitungsrohr 1 dargestellt, welches
eine Rohrwand 2 aufweist. In dem Leitungsrohr 1, welches
beispielsweise aus Metall oder Kunststoff bestehen kann,
strömt ein Fluid 3, wie z.B. eine Flüssigkeit oder ein
Gas.

Ein allgemein mit 4 bezeichneter Meßfühler weist einen
länglichen Körper 7 auf, der sich durch eine Öffnung 5 in
der Rohrwand 2 teilweise in das Innere des Leitungsrohres 1 erstreckt. Der Körper 7 ist dicht an der Rohrwand 2 durch z.B. Schweißen oder Kleben befestigt. Die
Schweißnaht oder das Klebematerial sind mit 6 bezeichnet.
Der Körper 7 kann auch mit einem Außengewinde ausgebildet
sein, mit dem er in ein in der Öffnung 5 der Rohrwand 2
dann vorgesehenes Innengewinde eingeschraubt ist. Diese
Art der Befestigung ist jedoch nicht näher dargestellt.

Der Körper 7 wird von einem zylinderförmigen Gehäuse 12
nach außen begrenzt, welches z.B. ein am unteren Ende geschlossenes Metallrohr sein kann. Innerhalb des Gehäuses
sind ein elektrisches Heizelement 11 und ein Temperaturfühler 14 angeordnet. Der Zwischenraum zwischen der Innenwandung des Gehäuses 12 und dem elektrischen Heizelement und dem Temperaturfühler 14 ist zweckmäßiger Weise mit einem Wärmeisolationsmittel 13 gefüllt. An dem sich in das Fluid erstreckenden Ende des Gehäuses 12 ist ein zusätzlicher Temperaturfühler 15 befestigt. Allgemein mit 16 bezeichnete Verbindungsleitungen für das elektrische Heizelement 11, den Temperaturfühler 14 und den zusätzlichen Temperaturfühler 15 erstrecken sich durch das Gehäuse nach außen und enden an Anschlußkontakten 17. Die Anschlußkontakte können als Kontaktstifte ausgebildet und so angeordnet sein, daß eine elektrische Verbindung mit einem üblichen Mehrfachstecker hergestellt werden kann.

Als elektrische Temperaturfühler kann z.B. ein Widerstandselement oder Thermoelement verwandt werden.

Es können auch mehrere Temperaturfühler innerhalb des Gehäuses vorgesehen sein, so daß die Temperatur des Körpers 7 an verschiedenen Stellen gemessen wird. Über die verschiedenen, gemessenen Temperaturwerte wird dann gemittelt, so daß sich eine mittlere Temperatur des Körpers 7 ergibt.

Der zusätzliche Temperaturfühler 15, der außerhalb des Körpers 7 angeordnet ist, dient dazu, die Temperatur des Fluids zu messen.

Das in dem Gehäuse 12 vorgesehene Wärmeisolationsmaterial 13 wird so ausgewählt, daß dessen Wärmeleitfähigkeit auf den vorgesehenen Einsatz hin abgestimmt wird. Hier spielt beispielsweise eine Rolle, ob es sich bei dem Fluid um ein Gas oder eine Flüssigkeit handelt.

Die Anschlußkontakte 17 sind mit einer nicht dargestellten Steuer- und Auswerteeinrichtung verbunden. Von dieser Einrichtung aus wird dem elektrischen Heizelement 11 ein vor-

13

0103150

bestimmter Strom zugeführt. Ferner kann durch die Steuer-
und Auswerteeinrichtung auch die Zeitdauer bestimmt werden, während der dem Heizelement 11 der elektrische Strom
zugeführt wird. Das Ausgangssignal des Temperaturfühlers
14 und dasjenige des zusätzlichen Temperaturfühlers 15
wird in der Steuer- und Auswerteeinrichtung verarbeitet.
Durch allgemein bekannte Zeitsteuerschaltungen werden die
Zeitintervalle festgelegt, während der eine Temperaturmessung erfolgen soll. Ferner wird auch mittels der Steuer-
und Auswerteeinrichtung festgestellt, wann sich ein stationärer
Temperaturunterschied zwischen dem Körper 7 und dem Fluid 3
eingestellt hat oder wann dieser Temperaturunterschied
kleiner als ein vorbestimmter Wert geworden ist.

In Fig. 2 ist ein Verbraucher 22 dargestellt, dem über eine
Zuführleitung 20 ein Fluid zugeführt wird, welches über eine
Rückführleitung 21 von dem Verbraucher 22 fortgeführt wird.
In der Zuführleitung 20 sind ein Meßfühler 4, wie er vorhergehend beschrieben worden ist, und ein zusätzlicher
Temperaturfühler 15 angeordnet. Im Gegensatz zur Fig. 1
ist hier der zusätzliche Temperaturfühler 15 räumlich mit
geringem Abstand von dem Meßfühler 4 angeordnet und nicht
an dem Gehäuse des Meßfühlers befestigt.

In der Rückführleitung ist ein weiterer Temperaturfühler
24 vorgesehen.

Die Anschlußleitungen des weiteren Temperaturfühlers 24,
des in dem Meßfühler 4 enthaltenen Temperaturfühlers und
der enthaltenen Heizungseinrichtung sowie des zusätzlichen
Temperaturfühlers 15 sind zu einer Steuer- und Auswerteeinrichtung 23 geführt.

Wie bereits eingangs beschrieben worden ist, kann die von
dem Verbraucher dem Fluid entnommene oder an dieses abgegebene Wärmemenge dadurch gemessen werden, daß die Strömungsgeschwindigkeit des Fluids und der Temperaturunterschied zwischen der Eintrittsseite und der Austrittsseite des Fluids in den bzw. aus dem Verbraucher gemessen wird.

Es sind zwei verschiedene Meßmethoden möglich.

Im folgenden soll beschrieben werden, wie die von einem Verbraucher aus einem Wärmefluid aufgenommene Wärmemenge bestimmt werden kann.

Bei der ersten, stationären Meßmethode wird dem elektrischen Heizelement des Meßfühlers eine elektrisch genau definierte Heizleistung kontinuierlich zugeführt. Dabei erwärmt sich der Körper auf eine Temperatur, die von der Strömungsgeschwindigkeit des Fluids abhängt, in dem er sich befindet. Die Erwärmungstemperatur wird durch den mindestens einen, in dem Körper angeordneten Temperaturfühler gemessen, der in Fig. 2 nicht näher dargestellt ist. Mit dem in dem Fluid angeordneten Temperaturfühler 15 wird die Fluidtemperatur gemessen, so daß sich der Temperaturunterschied zwischen der Temperatur des Körpers und der Fluidtemperatur bestimmen läßt. Dieser Temperaturunterschied ist ein direktes Maß für die Strömungsgeschwindigkeit. Die vorgesehene elektrische Steuer- und Auswerteeinrichtung 23 bestimmt den Unterschied zwischen der Temperatur des Körpers der Meßsonde und dem Fluid. Ferner wird durch die Steuer- und Auswerteeinrichtung 23 der Temperaturunterschied zwischen der Temperatur des Fluids in der Zuflußleitung 20 und derjenigen des Fluids in der Rückführleitung 21 bestimmt, indem die Ausgangssignale des Temperaturfühlers 15 in der Zuflußleitung 20 und des weiteren Temperaturfühlers 24 in der Rückführleitung 21 entsprechend ausgewertet werden. Aus dem Temperaturunterschied zwischen dem Körper des Meßfühlers 4 und der Temperatur des Fluids in dessen Bereich einerseits und dem Temperaturunterschied zwischen der Temperatur des Fluids im Bereich des Meßfühlers 4 und der Temperatur des Fluids in der Rückführleitung 21 andererseits wird ein Produkt gebildet, welches mit einer Eichkonstante, die dem jeweiligen Meßfühler zu eigen ist, korrigiert wird. Der erhaltene Wert stellt eine Größe für den momentanen Wärmeverbrauch des Verbrauchers dar. Wenn dieser Wert über die Zeit integriert wird, kann die gesamte während des Meßzeitintervalls verbrauchte Wärmemenge bestimmt werden, wobei zur Berechnung des Endwertes der Leitungsquerschnitt und der spezifische Wärmekoeffizient zu berücksichtigen sind.

Bei der zweiten, sogenannten instationären Meßmethode wird dem elektrischen Heizelement des Meßfühlers 4 eine genau definierte Heizleistung während einer genau festgelegten Heizzeit zugeführt. Daraufhin wird diejenige Zeitdauer bestimmt, bis der Temperaturunterschied zwischen dem Körper des Meßfühlers 4 und der Temperatur des Fluids, welche mit dem weiteren Temperaturfühler 24 gemessen wird, einen vorgegebenen, kleinen Wert erreicht oder unterschritten hat. Diese Abkühlzeitdauer ist ein direktes Maß für die Strömungsgeschwindigkeit des Fluids.

Durch die Steuer- und Auswerteeinrichtung 23 in Fig. 2 wird aus der mit einer eichbaren, meßfühlerspezifischen Konstanten korrigierten Abkühlzeit und dem Temperaturunterschied zwischen der Fluidtemperatur in der Zuflußleitung 20 und der Rückführleitung 21 ein Produkt gebildet. Die Produktbildung erfolgt sowohl bei der ersten als auch bei der zweiten Meßmethode elektronisch. Das diesem Produkt entsprechende elektrische Signal ist ein direktes Maß für die von dem Verbraucher aus dem Fluid aufgenommene Wärmemenge. Wenn diese instationäre Meßung periodisch wiederholt wird und das dem Produkt entsprechende, elektrische Signal über die Zeit gemittelt und aufsummiert wird, kann der gesamte Wärmemengenverbrauch nach einer be-

0103150

liebig langen Meßzeit sofort angegeben werden, wobei der Rohrleitungsquerschnitt und die spezifische Wärmekonstante des Fluids zu berücksichtigen sind.

Die erfindungsgemäße Einrichtung zum Bestimmen der Strömungsgeschwindigkeit eines Fluids in Kombination mit einem weiteren Temperaturfühler läßt sich ohne weiteres, insbesondere bei Heizungsanlagen ,nachträglich einbauen. Dies gestaltet sich besonders einfach, wenn, wie es im Rahmen der Erfindung vorgesehen ist, die Einrichtung zum Messen der Strömungsgeschwindigkeit in Form eines Meßfühlers und der zusätzliche Temperaturfühler in eine Armatur eingebaut wird. Eine solche Armatur kann ein Rohrabschnitt sein, welcher mit einem bereits im Heizsystem vorgesehenen Rohrabschnitt stromaufwärts oder stromabwärts des Verbrauchers ausgewechselt wird. Zusätzlich ist dann nur noch der weitere Temperaturfühler in der Zufluß- oder Rückführleitung zu installieren, die nicht mit der mit dem Meßfühler ausgerüsteten Armatur direkt verbunden ist.

Vorteilhafterweise kann die erfindungsgemäße Einrichtung zum Bestimmen der Strömungsgeschwindigkeit eines Fluids in Form eines Meßfühlers zusammen mit dem zusätzlichen Temperaturfühler in ein von Hand zu betätigendes Ventil eines beispielsweise Heizkörpers eingebaut werden. Bei Handventilen läßt sich die Bewegung des Ventilschaftes oder des Ventilkegels dazu benützen, eine Reinigung der Außenfläche des Meßfühlers dadurch durchzuführen, daß diese Außenfläche abgeschabt wird. Insbesondere wenn stärkere Ablagerungen auf der Außenfläche des Meßfühlers zu erwarten sind, kann durch diesen bei Betätigung des Handventils stattfindenden Reinigungsvorgang eine ausreichende Meßgenauigkeit aufrecht erhalten werden.

GRÜNECKER, KINKELDEY, STOCKMAIR & PARTNER

PATENTANWÄLTE
EUROPEAN PATENT ATTORNEYS

A. GRÜNECKER, DIPL.-ING
DR. H. KINKELDEY, DIPL.-ING
DR. W. STOCKMAIR, DIPL.-ING. AE E (CALTECH)
DR. K. SCHUMANN, DIPL.-PHYS
P. H. JAKOB, DIPL.-ING
DR. G. BEZOLD, DIPL.-CHEM
W. MEISTER, DIPL.-ING
H. HILGERS, DIPL.-ING
DR. H. MEYER-PLATH, DIPL.-ING

8000 MÜNCHEN 22
MAXIMILIANSTRASSE 43

0103150

EP 1243

Tecova AG

Litzibuech 8, 5610 Wohlen, Schweiz

Verfahren zum Messen der Strömungsgeschwindigkeit eines Fluids und Einrichtung zur Durchführung des Verfahrens.

Patentansprüche

1. Verfahren zum Messen der Strömungsgeschwindigkeit
eines Fluids, dadurch g e k e n n z e i c h n e t , daß
einem von dem Fluid umströmten Körper eine vorbestimmte
Kühlleistung oder Heizleistung zugeführt und die Strömungsgeschwindigkeit aufgrund des Temperaturunterschiedes zwischen der Temperatur des Körpers und der Temperatur des
Fluids im Bereich des Körpers bestimmt wird.

2. Verfahren nach Anspruch 1, dadurch g e k e n n -
z e i c h n e t , daß dem Körper die vorbestimmte Kühlleistung oder Heizleistung zumindest solange zugeführt
wird, bis der Temperaturunterschied stationär geworden ist.

3. Verfahren nach Anspruch 1, dadurch g e k e n n - z e i c h n e t , daß dem Körper die vorbestimmte Kühlleistung oder Heizleistung während einer kurzen Zeitdauer zugeführt und daraufhin das Zeitintervall bestimmt wird, bis der Temperaturunterschied einen vorgegebenen kleinen Wert unterschritten hat.

4. Verfahren zum Bestimmen der von einem fluiddurchflossenen Verbraucher aus dem Fluid aufgenommenen oder an das Fluid abgegebenen Wärmemenge, dadurch g e k e n n - z e i c h n e t , daß die Strömungsgeschwindigkeit des Fluids nach einem der in den Ansprüchen 1 bis 3 angegebenen Verfahren an der Eintrittsseite und/oder der Austrittsseite des Fluids in den bzw. aus dem Verbraucher und der Unterschied der Fluidtemperatur zwischen der Eintrittsseite und der Austrittsseite des Verbrauchers bestimmt werden.

5. Einrichtung zum Messen der Strömungsgeschwindigkeit eines Fluids insbesondere zur Durchführung des Verfahrens nach einem der Ansprüche 1 bis 3, dadurch g e k e n n - z e i c h n e t , daß die Einrichtung einen Körper (7), welcher Kühlmittel zum Verringern und/oder Heizmittel (11) zum Erhöhen der Temperatur des Körpers (7) aufweist und zumindest teilweise in dem Fluid (3) anzuordnen ist, und mindestens einen Temperaturfühler (14) zum Bestimmen der Temperatur des Körpers (7) sowie einen zusätzlichen Temperaturfühler (15) zum Bestimmen der Temperatur des Fluids (3) im Bereich des Körpers (7) umfaßt.

6. Einrichtung nach Anspruch 5, dadurch g e k e n n - z e i c h n e t , daß die Kühlmittel und/oder Heizmittel als eine von einem Kühlmedium bzw. Heizmedium durchströmbare Leitung ausgebildet sind.

0103150

7. Einrichtung nach Anspruch 6, dadurch g e k e n n - z e i c h n e t , daß die Heizmittel eine elektrische Heizeinrichtung (11) umfassen.

8. Einrichtung nach mindestens einem der Ansprüche 5 bis 7, dadurch g e k e n n z e i c h n e t , daß die Kühl- mittel und/oder Heizmittel und der mindestens eine Temperaturfühler (14) unter Bildung des Körpers (7) mit einem Werkstoff vergossen und/oder in diesen eingebettet sind.

9. Einrichtung nach mindestens einem der Ansprüche 5 bis 7, dadurch g e k e n n z e i c h n e t , daß der Körper (7) eine Umhüllung (12) aufweist, in der der mindestens eine Temperaturfühler (14) und die Kühlmittel und/oder Heizmittel (11) angeordnet sind.

10. Einrichtung nach Anspruch 9, dadurch g e k e n n - z e i c h n e t , daß der mindestens eine Temperaturfühler (14) sowie die Kühlmittel und/oder Heizmittel (11) mit Abstand von der Innenwandung der Umhüllung (12) angeordnet sind und daß der sich ergebende Zwischenraum mit einem Material (13) geringer Wärmeleitfähigkeit gefüllt ist.

11. Einrichtung nach Anspruch 9 oder 10, dadurch ge - k e n n z e i c h n e t , daß die Umhüllung (12) aus Metall besteht.

12. Einrichtung nach Anspruch 5 oder 8, dadurch g e - k e n n z e i c h n e t , daß der zusätzliche Temperatur- fühler (15) an dem Körper (7) befestigt ist.

13. Einrichtung nach Anspruch 9 oder 10, dadurch g e - k e n n z e i c h n e t , daß der zusätzliche Temperatur- fühler (15) an der Umhüllung (12) befestigt ist.

14. Einrichtung nach mindestens einem der Ansprüche 5 bis 13, dadurch g e k e n n z e i c h n e t , daß eine Steuer- und Auswerteeinrichtung (23) vorgesehen ist, der die Ausgangssignale der Temperaturfühler (14,15) zugeführt werden und mit der dem Körper (7) eine vorbestimmte Kühlleistung oder Heizleistung zuführbar und der Temperaturunterschied zwischen der Temperatur des Körpers (7) und der Temperatur des Fluids (3) im Bereich des Körpers (7) feststellbar ist.

15. Einrichtung nach Anspruch 14, dadurch g e k e n n z e i c h n e t , daß dem Körper (7) durch die Steuer- und Auswerteeinrichtung (23) eine vorbestimmte Kühlleistung oder Heizleistung während einer Zeitdauer zuführbar ist, die zum Einstellen eines stationären Temperaturunterschiedes zwischen der Temperatur des Körpers (7) und der Temperatur des Fluids (3) im Bereich des Körpers (7) ausreichend lang ist.

16. Einrichtung nach Anspruch 14, dadurch g e k e n n z e i c h n e t , daß dem Körper (7) durch die Steuer- und Auswerteeinrichtung (23) eine vorbestimmte Kühlleistung oder Heizleistung während einer relativ kurzen Zeitdauer zuführbar ist und daß durch die Steuer- und Auswerteeinrichtung (23) die Zeitdauer feststellbar ist, die zur Verringerung des Temperaturunterschiedes zwischen der Temperatur des Körpers (7) und der Temperatur des Fluids (3) im Bereich des Körpers (7) unter einen vorbestimmten kleinen Wert erforderlich ist.

17. Einrichtung nach mindestens einem der Ansprüche 5 bis 13, dadurch g e k e n n z e i c h n e t , daß der Körper (7) zumindest teilweise innerhalb eines handelsüblichen Rohrleitungs- oder Armaturteils angeordnet ist.

18. Einrichtung nach Anspruch 17, dadurch g e k e n n - z e i c h n e t , daß das Armaturteil ein Ventil ist.

19. Einrichtung nach Anspruch 18, dadurch g e k e n n - z e i c h n e t , daß in dem Ventil ein mit der Oberfläche des Körpers (7) in Eingriff stehendes oder in Eingriff bringbares und relativ zu der Oberfläche des Körpers bewegbares Schaberelement vorgesehen ist, welches antriebsmäßig mit einem bei Betätigung des Ventils bewegten Teil verbunden ist, wodurch bei Betätigung des Ventils mindestens ein Bereich der Oberfläche des Körpers gesäubert wird.

20. Einrichtung zum Bestimmen der von einem fluiddurchflossenen Verbraucher aus dem Fluid aufgenommenen oder an das Fluid abgegebenen Wärmemenge, dadurch g e k e n n - z e i c h n e t , daß an der Fluideintrittsseite und/oder der Fluidaustrittsseite des Verbrauchers (22) eine der in den Ansprüchen 5 bis 19 angegebenen Einrichtung zum Messen der Strömungsgeschwindigkeit und an der Fluidaustrittsseite bzw. der Fluideintrittsseite ein weiterer Temperaturfühler (24) zum Feststellen der dort vorliegenden Fluidtemperatur angeordnet ist, wodurch aufgrund der Strömungsgeschwindigkeit des Fluids und des Temperaturunterschiedes zwischen dem Fluid an der Fluideintrittsseite und an der Fluidaustrittsseite die von dem Verbraucher (22) aus dem Fluid aufgenommene oder an dieses abgegebene Wärmemenge bestimmbar ist.

EP 1243
0103150

**Fig.1**

**Fig.2**

| | EINSCHLÄGIGE DOKUMENTE | | EP 83107744.1 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X,Y | US - A - 4 255 968 (HARPSTER)<br><br>* Fig. 1,2,4a,4b,4c; Zusammenfassung * | 1,2,5,<br>7-12,<br>14,15,<br>17 | G 01 F 1/68<br><br>G 01 P 5/10<br><br>G 01 K 17/10 |
| Y | CH - A5 - 607 001 (LGZ)<br><br>* Patentanspruch; Fig. 1,2 * | 1,2,5,<br>8,9,10,<br>14,15 | |
| A | US - A - 2 543 588 (NELSON)<br><br>* Fig. 2; Spalte 3, Zeilen 40-70 * | 1,2,5,<br>7,14,<br>15,17 | |
| A | GB - A - 1 345 324 (NATIONAL RE-SEARCH)<br><br>* Patentansprüche; Fig. 1,2 * | 3,16 | |
| A | AT - B - 342 336 (SETRON)<br><br>* Seite 2, Zeilen 11-19 * | 4,20 | RECHERCHIERTE SACHGEBIETE (Int. Cl. ³) |
| A | DE - A1 - 2 504 797 (KAMSTRUP-METRO A/S)<br><br>* Fig. 1 * | 4,20 | G 01 F 1/00<br><br>G 01 P 5/00<br><br>G 01 K 17/00 |
| A | DE - B - 2 213 760 (DANFOSS A/S)<br><br>* Fig. 1,2 * | 4,20 | |
| A | GB - A - 991 006 (SATCHWELL)<br><br>* Fig. 1 * | 4,20 | |

Der vorliegende Recherchenbericht wurde für alle Patentansprüche erstellt.

| Recherchenort | Abschlußdatum der Recherche | Prüfer |
|---|---|---|
| WIEN | 27-12-1983 | BURGHARDT |